# EUROPEAN PATENT APPLICATION

(11) **EP 4 495 058 A1**
(43) Date of publication of application: **22.01.2025**
(21) Application number: 24187550.9
(22) Date of filing: 09.07.2024
(51) Int. Cl.: C01B 3/04

(54) **SYSTEM FOR CONTROLLING AMMONIA REACTOR AND METHOD OF GENERATING HYDROGEN**

(30) Priority: 21.07.2023 KR 20230095551
(71) Applicant: SK Innovation Co., Ltd., Seoul 03188 (KR)
(72) Inventor: PARK, Chan Saem, 34124 Daejeon (KR); KIM, Jae Jeong, 34124 Daejeon (KR); BAE, Sun Hyuk, 34124 Daejeon (KR)
(74) Representative: Prüfer & Partner mbB Patentanwälte · Rechtsanwälte

(57) **Abstract**

A system (10) for controlling an ammonia reactor includes a sensor (110) measuring an internal temperature of a cracker (100), a controller (120) configured to receive temperature information collected from the sensor (110), a hydrogen supplier (130 configured to determine a hydrogen supply amount into the cracker (100) according to a first signal from the controller (120), and an ammonia supplier (140) configured to determine an ammonia supply amount into the cracker (100) according to a second signal from the controller (120). The controller (120) is configured to receive ammonia supply amount information from the ammonia supplier (140), and to determine the first signal based on the temperature information and the ammonia supply amount information.

## Description

### TECHNICAL FIELD

Embodiments of the present disclosure relate generally to a system and method for controlling an ammonia reactor and generating hydrogen.

### BACKGROUND

In a system for ammonia decomposition, the ammonia decomposition amount may variably depend on the state of a driving vehicle that may employ, e.g., a fuel cell, and the ammonia supply amount may be changed depending on the ammonia cracker temperature also referred to as the ammonia reactor) so that an ammonia decomposition ratio in the reactor due to a change in the reactor temperature can be stabilized.

In the load-following operation process, when an ammonia supply into the reactor is increased in order to increase a hydrogen production within a short period, a temperature reduction in the reactor may be caused because the supplied ammonia is normally at room temperature.

When an internal temperature of the reactor is temporarily lowered, the ammonia decomposition ratio may be decreased, which may cause a catalyst deactivation within an inside of the reactor or performance degradation of an entire apparatus. Accordingly, an amount of residual ammonia in the apparatus may be increased. The residual ammonia may be supplied to an adsorption tower or a fuel cell, thereby causing overall performance degradation or unexpected defects of the apparatus.

### SUMMARY

According to an embodiment of the present disclosure, there is provided a system for controlling an ammonia reactor having improved process efficiency.

According to an embodiment of the present disclosure, there is provided a method of generating hydrogen having improved process efficiency.

The embodiments of the present disclosure are not specifically limited, and other embodiments that are not clearly mentioned will also be understood by those skilled in the art from the following descriptions.

A system for controlling an ammonia reactor includes a sensor configured to measure an internal temperature of a cracker, a controller configured to receive temperature information collected from the sensor, a hydrogen supplier configured to determine a hydrogen supply amount into the cracker according to a first signal from the controller, and an ammonia supplier configured to determine an ammonia supply amount into the cracker according to a second signal from the controller. The controller is configured to receive ammonia supply amount information from the ammonia supplier, and to determine the first signal based on the temperature information and the ammonia supply amount information.

In some embodiments, the system may further include a storage device configured to store a preset heat supply amount information to a fuel cell through the cracker. The controller may be configured to check the preset heat supply amount information from the storage device, and to calculate an internal heat absorption information of the cracker based on the temperature information.

In some embodiments, the controller may be configured to compare the preset heat supply amount information with the internal heat absorption information of the cracker, and to temporarily lower a power of the fuel cell.

In some embodiments, the reactor may further include a temperature sensor configured to detect a temperature of ammonia supplied into the cracker from the ammonia supplier, and a pre-heater for pre-heating ammonia supplied into the cracker according to a third signal from the controller.

In some embodiments, the controller may be configured to receive an ammonia temperature information in the ammonia supplier from the temperature sensor, and to determine the third signal for operating the pre-heater based on the ammonia temperature information.

In some embodiments, the controller may be configured to receive a hydrogen supply amount information from the hydrogen supplier, and to determine the second signal based on the temperature information and the hydrogen supply amount information.

In some embodiments, the controller may be configured to determine the ammonia supply amount as a first capacity according to the second signal if a temperature of the cracker corresponds to a preset first temperature range, and to determine the ammonia supply amount as a second capacity according to the second signal if the temperature of the cracker corresponds to a preset second temperature range. A lower limit of the first temperature range may be greater than an upper limit of the second temperature range, and the first capacity may be less than the second capacity.

In some embodiments, the sensor may be configured to measure temperatures of internal portions of the cracker including a first portion and a second portion of the cracker. The ammonia supplier may be connected to the first portion and the second portion. The controller may be configured to determine the second signal based on temperature information of the first portion and the second portion.

In some embodiments, the controller may be configured to determine the first signal or the second signal based on the temperature information, the ammonia supply amount information and the hydrogen supply amount information.

In a method of generating hydrogen from an ammonia feed, ammonia is fed to a cracker. Temperature information collected from a sensor that measures an internal temperature of the cracker is received. Ammonia supply amount information is received from an ammonia supplier that determines an ammonia supply amount into the cracker. A hydrogen supply amount information is received from a hydrogen supplier that determines a hydrogen supply amount into the cracker. A first signal or a second signal is provided to the hydrogen supplier or the ammonia supplier based on the temperature information, the ammonia supply amount information and the hydrogen supply amount information.

According to the above-described embodiments, the ammonia reactor control system may be configured to increase or decrease a supply amount of ammonia and/or an unreacted hydrogen depending on a temperature of a cracker to maintain a proper internal temperature of the cracker. Accordingly, a reduction of a reaction rate in the cracker may be prevented.

In some embodiments, the ammonia reactor control system may appropriately be configured to maintain an internal temperature in the cracker to reduce an amount of a residual ammonia. Accordingly, performance deterioration of the system due to the residual ammonia may be prevented.

The effects of the embodiment of the present disclosure are not limited to those mentioned above, and other effects that are not specifically mentioned will be clearly understood by those skilled in the art from the following descriptions.

### BRIEF DESCRIPTION OF THE DRAWINGS

FIG. 1 is a block diagram of a system for controlling an ammonia reactor in accordance with embodiments of the present disclosure.
FIG. 2 is a schematic block diagram illustrating components of a system for controlling an ammonia reactor in accordance with embodiments of the present disclosure.
FIG. 3 is a schematic flowchart describing a method of controlling a system for controlling an ammonia reactor in accordance with embodiments of the present disclosure.
FIG. 4 is a schematic flowchart describing an ammonia pre-heating in a system for controlling an ammonia reactor in accordance with embodiments of the present disclosure.
FIG. 5 is a schematic flowchart describing determination of an ammonia supply amount in a system for controlling an ammonia reactor in accordance with embodiments of the present disclosure.
FIG. 6 is a schematic flowchart describing determination of an ammonia supply amount based on an individual partial temperature of a cracker in a system for controlling an ammonia reactor in accordance with embodiments of the present disclosure.

### DETAILED DESCRIPTION

Throughout the present disclosure, the same reference numerals refer to the same elements. The present disclosure does not describe all elements of the embodiments, and general contents in the technical field to which the present disclosure pertains or repeated contents between embodiments may be omitted. The terms "part," "module," "member," "block," and the like, when used herein may be implemented by software or hardware, and according to embodiments, a plurality of the "'part," "module," "member," "block," and the like, may be implemented as a single element, or may include a plurality of elements.

Throughout the specification, when an element or portion is recited as being "connected" to another element or portion, the recitation includes a direct connection, and an indirect connection, and an indirect connection may include a wireless communication network.

When an element is recited to "include" another element, the elements may include other elements, rather than excluding other elements, unless otherwise described.

Throughout the specification, when an element is recited to be positioned "on" another element, the recitation includes a case where an element is in contact with another element, and a case where another element is present between the two elements.

Terms such as "a first," "a second," and the like are used to distinguish one element from another element, and the elements are not limited by the terms.

As used herein, the singular forms "a," "an" and "the" are intended to include the plural forms as well, unless the context clearly indicates otherwise.

A reference numeral designating an operation is used for convenience of descriptions and is not intended to limit the order of the operation, and the operation may be performed differently from the specified order unless a specific order is clearly described herein.

Hereinafter, operation mechanisms and embodiments of the present disclosure will be described with reference to the accompanying drawings.

In the present specification, "the device (or an apparatus) according to the present disclosure" includes all various devices capable of performing arithmetic processing and providing a result to a user. For example, the device according to the present disclosure may include all of a computer, a server device and a portable terminal, or may include any one of the forms.

Here, the computer may include, e.g., a notebook computer, a desktop, a laptop computer, a tablet PC, a slate PC, etc., equipped with a web browser.

The server device is a server that processes information by communicating with an external device, and may include an application server, a computing server, a database server, a file server, a game server, a mail server, a proxy server, a web server, etc.

For example, the portable terminal may be a wireless communication device having portability and mobility. The portable terminal may include all types of handheld-based wireless communication devices such as a personal communication system (PCS), a global system for mobile communications (GSM), a personal digital cell (PDC), a personal handy phone system (PHS), a personal digital assistant (PDA), an International Mobile Telecommunication (IMT)-2000, Code Division Multiple Access (CDMA)-2000, W-CDMA (W-Code Division Multiple Access), a wireless broadband Internet (WiBro) terminal, a smartphone, etc., and may include wearable devices such as a watch, a ring, a bracelet, an anklet, a necklace, glasses, contact lenses, or a head-mounted-device (HMD).

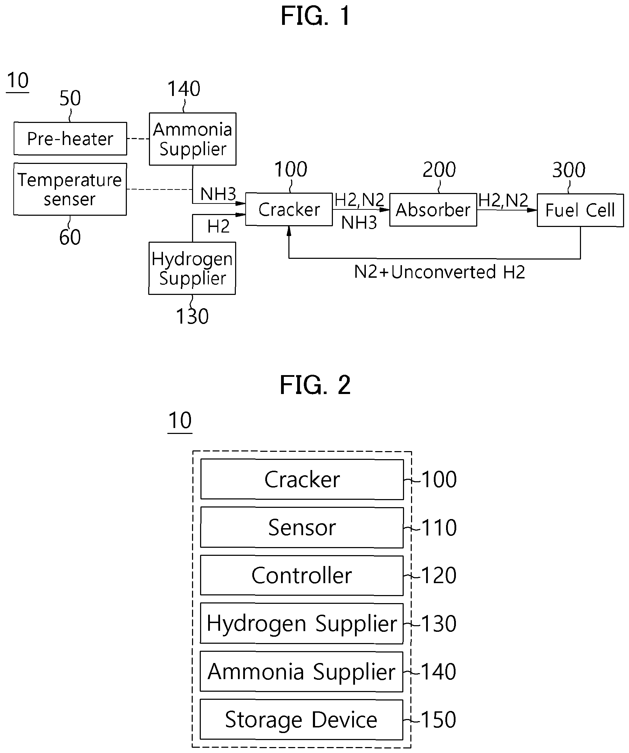

FIG. 1 is a block diagram of a system for controlling an ammonia reactor in accordance with embodiments of the present disclosure.

Referring to FIG. 1, a system for controlling an ammonia reactor system 10 (hereinafter, referred to as the ammonia reactor control system) includes a cracker 100, an absorber 200 and a fuel cell 300. Each of the components/nodes may exchange data with different components/nodes. The components/nodes may be connected to each other through a network.

The ammonia reactor control system 10 according to embodiments of the present disclosure may receive and decompose ammonia (NH₃) through the cracker 100. When an internal temperature of the cracker 100 is temporarily lowered, the ammonia decomposition ratio may be lowered due to catalyst deactivation or performance degradation in the cracker 100. Accordingly, the residual ammonia in the cracker 100 may be relatively increased.

In some embodiments, the cracker 100 may receive ammonia to produce hydrogen (H₂), nitrogen (N₂) and ammonia (NH₃) as decomposition products. Thereafter, hydrogen and nitrogen pass through the absorber 200 and are supplied to the fuel cell 300 where the hydrogen and nitrogen are utilized to generate power which is supplied to a battery. Hence, the absorber may comprise an absorbent that preferentially absorbs ammonia while allowing the purified nitrogen and hydrogen to pass through. The purified mixture of hydrogen and nitrogen is then fed to the fuel cell 300. In the fuel cell 300 the hydrogen may serve as the fuel while the nitrogen may serve as the oxidizing agent.

In some embodiments, the fuel cell 300 may completely combust an unconverted hydrogen by supplying nitrogen and the unconverted hydrogen back into the cracker 100. Accordingly, the ammonia reactor control system 10 may combust by-products generated by an imbalance between materials supplied into the cracker 100 again through a feedback.

FIG. 2 is a schematic block diagram illustrating components of a system for controlling an ammonia reactor in accordance with embodiments of the present disclosure.

Referring to FIG. 2, the ammonia reactor control system 10 may include the cracker 100, a sensor 110, a controller 120, a hydrogen supplier 130, an ammonia supplier 140 and a storage device 150. An internal structure included in the ammonia reactor control system 10 may include the absorber 200 and the fuel cell 300 as shown in FIG. 1 but is the embodiments are not limited thereto.

In some embodiments, the function of the controller 120 may be performed through a separate processing server or a cloud server instead of the controller 120.

In some embodiments, a reactor of the ammonia reactor control system 10 may refer to an apparatus such as a cracker 100.

The controller 120 may receive ammonia supply amount information from the ammonia supplier 140. The controller 120 may receive hydrogen supply amount information from the hydrogen supplier 130. In some embodiments, the controller 120 may receive supply amounts of ammonia and hydrogen supplied into the cracker 100 of the ammonia reactor control system 10 from the ammonia supplier 140 and the hydrogen supplier 130, respectively.

The controller 120 may receive internal temperature information of the cracker 100 from the sensor 110. The controller 120 may receive internal temperatures of a first portion and a second portion of the cracker 100. The sensor 110 may include a plurality of sensors to collect the temperature information on the first and second portions of the cracker 100, respectively. The first portion and the second portion may refer to portions of the cracker 100 that may not overlap with each other. In some embodiments, the first portion and the second portion may be a portion of a part where the ammonia supplier 140 and the cracker 100 may be connected.

In some embodiments, the hydrogen supplier 130 may determine an amount of hydrogen supplied into the cracker 100 according to a first signal from the controller 120. The amount of hydrogen supplied to the cracker 100 may be adjusted according to the first signal from the controller 120.

In some embodiments, the ammonia supplier 140 may determine an amount of ammonia supplied into the cracker 100 according to a second signal from the controller 120. The amount of ammonia supplied to the cracker 100 may be adjusted according to the second signal from the controller 120.

In some embodiments, the storage device 150 may store data supporting various functions of the ammonia reactor control system 10 and a program for the operation of the controller 120. The storage device 150 may store input/output data (e.g., an image, a video, etc.). The storage device 150 may store an application program or an application driven in the ammonia reactor control system 10, and data and instructions for the operation of the ammonia reactor control system 10. At least one of the application programs may be downloaded from an external server through a wireless communication.

The storage device 150 may include at least one type of storage media selected from a network attached storage (NAS), a flash memory type, a hard disk type, a solid state disk (SSD) type, a silicon disk drive (SSD) type, a multimedia card micro type, a card type memory (e.g., an SD or XD memory, etc.), a random access memory (RAM), a static random access memory (SRAM), a read-only memory (ROM), an electrically erasable programmable read-only memory (EEPROM), a programmable read-only memory (PROM), a magnetic memory, a magnetic disk and an optical disk. The storage device 150 may include a database separated from the ammonia reactor control system 10, and may be wire-connected or wireless-connected to the ammonia reactor control system 10.

The ammonia reactor control system 10 may further include an output element (not illustrated). The output element may generate an output related to a visual sense, a hearing sense, or a touch sense, and may include a display device.

The display device may form a mutual-layered structure with a touch sensor or may be provided as an integral structure with the touch sensor to implement a touch screen. The touch screen may be provided as a user input element that provides an input interface between the ammonia reactor control system 10 and the user, and may provide an output interface between the ammonia reactor control system 10 and the user.

The display device may display (output) information processed in the ammonia reactor control system 10. For example, the display device may display an execution screen information of the application program (e.g., the application) driven in the ammonia reactor control system 10, or information of a user interface (UI) or graphic user interface (GUI) information according to the execution screen information.

At least one of the elements may be added or deleted corresponding to the performance of the elements shown in FIG. 2. Further, it may be easily understood by those ordinarily skilled in the art that mutual positions of the various elements may be changed corresponding to the performance or the structure of the ammonia reactor control system 10.

Each element shown in FIG. 2 may be implemented via software and/or hardware such as a field programmable gate array (FPGA) and an application specific integrated circuit (ASIC).

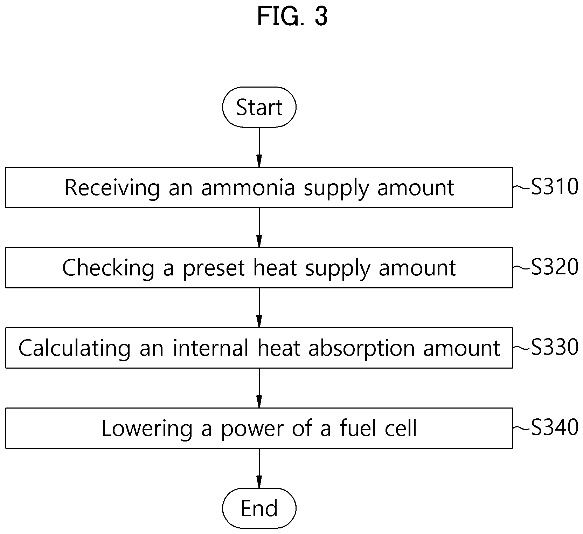

FIG. 3 is a schematic flowchart describing a method of controlling a system for controlling an ammonia reactor in accordance with embodiments of the present disclosure.

Referring to FIG. 3, an ammonia reactor control system (e.g., the ammonia reactor control system 10 of FIG. 1) may calculate an internal heat absorption amount of the cracker 100 using an internal temperature information of a cracker (e.g., cracker 100 of FIG. 1) to temporarily lower a power of the fuel cell.

In an operation S310, a controller (e.g., the controller 120 of FIG. 2) may receive an ammonia supply amount (also referred to herein as ammonia supply amount information). The controller 120 may receive the ammonia supply amount through an ammonia supplier (e.g., the ammonia supplier 140 of FIG. 2). The controller 120 may receive the ammonia supply amount information from a separate flow-meter or a supply amount measurement device installed in the ammonia supplier 140. The ammonia supplier 140 may include an ammonia supply line.

In an operation S320, the controller 120 may check a preset heat supply amount information (also referred to as preset heat supply amount. The ammonia reactor control system 10 may differently adjust a hydrogen supply pattern using the first signal to induce an improved ramping effect in consideration of the stability of a hydrogen reaction. For example, the same total amount of hydrogen may be supplied by changing the pattern.

The controller 120 may check the preset heat supply amount information from a storage device (e.g., the storage device 150 in FIG. 2). In an operation S330, the controller 120 may calculate a heat absorption information in the cracker 100 based on a temperature information received from a sensor (e.g., the sensor 110 in FIG. 2).

In an operation S340, the controller 120 may temporarily lower the power of the fuel cell 300 by comparing the preset heat supply amount information with the internal heat absorption information of the cracker 100. For example, a temporary period may be in a range from about 3 to 5 seconds and may vary depending on experimental values. The preset heat supply amount information may correspond to a threshold value of the internal heat absorption amount of the cracker 100.

In some embodiments, the preset heat supply amount may be set to a heat supply amount that can prevent a decrease of the internal temperature of the cracker 100 due to excessive ammonia or excessive hydrogen.

The controller 120 may determine the first signal based on the temperature information and the ammonia supply amount information. Using the first signal from the controller 120, the ramping effect in the cracker may be controlled through the preset heat supply amount information.

In some embodiments, if the internal heat absorption of the cracker is lower than the preset heat supply amount, the controller 120 may increase the internal temperature of the cracker 100 by increasing the hydrogen supply amount through the first signal. Accordingly, the ramping effect in the ammonia reactor control system 10 may be amplified.

In some embodiments, the controller 120 may increase the amount of hydrogen supplied from the fuel cell 300 as the temperature of the cracker 100 decreases. Accordingly, the temperature of the cracker 100 may be rapidly increased by the controller 120. In the determination of the hydrogen supply amount, the controller 120 may change the hydrogen supply pattern to generate a maximum ramping effect in consideration of the hydrogen reaction stability.

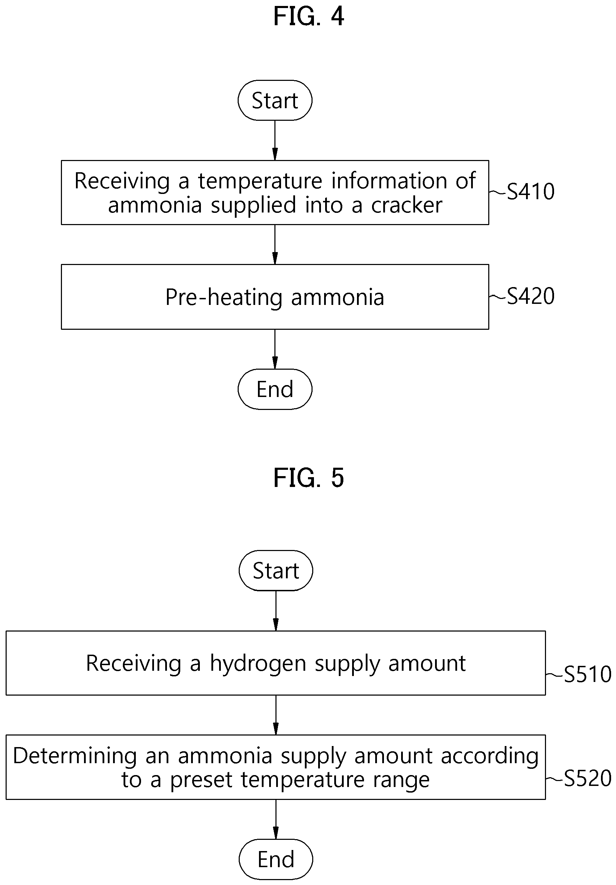

FIG. 4 is a schematic flowchart describing an ammonia pre-heating in a system for controlling an ammonia reactor in accordance with embodiments of the present disclosure.

In an operation S410, the controller (e.g., the controller 120 in FIG. 2) may receive a temperature information of ammonia supplied to the inside of the cracker (e.g., the cracker 100 in FIG. 1). The controller 120 may receive the ammonia temperature information through a separate temperature sensor 60 capable of detecting the temperature of ammonia supplied to the inside the cracker 100.

In an operation S420, the controller 120 may determine a third signal based on the ammonia temperature information. The controller 120 may pre-heat ammonia in advance before being supplied to the cracker through the third signal. The ammonia reactor control system (e.g., the ammonia reactor control system 10 of FIG. 1) may further include a pre-heater 50 that may pre-heat ammonia being supplied into the cracker 100 according to the third signal. The pre-heater 50 may be located at an inside or an outside of an ammonia supplier (e.g., the ammonia supplier 140). The pre-heater 50 may be placed in any position capable of pre-heating ammonia in the ammonia supplier 140.

In some embodiments, the controller 120 may receive the ammonia temperature information in the ammonia supplier 140 from the temperature sensor 60. Accordingly, the controller 120 may check whether the temperature of ammonia to be supplied to the cracker 100 through the ammonia supplier 140 is lower than a temperature of ammonia already existing in the cracker 100.

In an embodiment, when the ammonia temperature of the ammonia supplier 140 is lower than the ammonia temperature in the cracker 100, the controller 120 may operate the pre-heater through the third signal to increase the ammonia temperature of the ammonia supplier 140.

In an embodiment, when the temperature of the ammonia in the ammonia supplier 140 to be supplied into the cracker 100 is low, the controller 120 may operate the pre-heater to increase the temperature of ammonia in the ammonia supplier 140 in advance through the third signal.

As described above, factors causing the decrease of the internal temperature in the cracker 100 may be controlled. For example, the temperature control may be performed using a mechanism that decomposes ammonia that is an endothermic reaction.

In some embodiments, the pre-heater may include a material having a high thermal conductivity and a large heat capacity. The pre-heater may be formed of a material capable of providing a uniform heat transfer when pre-heating ammonia.

FIG. 5 is a schematic flowchart describing a determination of an ammonia supply amount in a system for controlling an ammonia reactor in accordance with embodiments of the present disclosure.

In an operation S510, the controller (e.g., the controller 120 of FIG. 2) may receive a hydrogen supply amount (also referred to as hydrogen supply amount information) from the hydrogen supplier (e.g., the hydrogen supplier 130 of FIG. 2). The controller 120 may receive the hydrogen supply amount information through a separate flow-meter or a supply amount measurement apparatus installed in the hydrogen supplier 130.

In operation S520, the controller 120 may determine an ammonia supply amount according to a preset temperature range. The controller 120 may determine the ammonia supply amount in the cracker (e.g., the cracker 100 in FIG. 1) according to the second signal.

In some embodiments, the controller 120 may check information on the preset temperature range from the storage device (e.g., the storage device 150 of FIG. 2). The preset temperature range may include a first temperature range and a second temperature range. For example, the first temperature range and the second temperature range may be continuous temperature ranges without overlapping each other. That is, a lower limit of the first temperature range may be greater than an upper limit of the second temperature range.

In an embodiment, when the temperature of the cracker 100 is within the first preset temperature range, the controller 120 may determine the ammonia supply amount according to the second signal as a first capacity. In an embodiment, when the temperature of the cracker 100 is within the preset second temperature range, the controller 120 may determine the ammonia supply amount according to the second signal as a second capacity. The first capacity may be smaller than the second capacity. The first temperature range, the second temperature range, the first capacity and the second capacity may be experimental values and may be stored as preset values according to a user's experiment results.

In some embodiments, a threshold value may be used in which a time or a cost required to increase the internal temperature of the cracker 100 is greater than a cost incurred by stopping the ammonia supply. When the threshold value is reached, the controller 120 may adjust the ammonia supply amount by reducing or blocking the ammonia supply. The controller 120 may adjust the ammonia supply amount based on the second signal. According to the embodiment of FIG. 5, when reducing the ammonia supply amount, the controller 120 may change the ammonia supply amount reduction pattern according to a preset temperature range of the cracker 100 so that a maximum ramping effect may be achieved depending on the situation at the inside of the cracker 100.

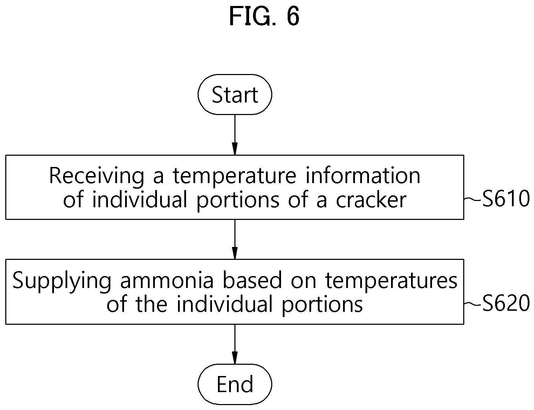

FIG. 6 is a schematic flowchart describing a determination of an ammonia supply amount based on an individual partial temperature of a cracker in a system for controlling an ammonia reactor in accordance with embodiments of the present disclosure.

In an operation S610, the controller (e.g., the controller 120 of FIG. 2) may receive temperature information of individual portions of the cracker (e.g., the cracker 100 of FIG. 1). The controller 120 may receive internal temperatures including the internal temperatures of the first portion and the second portion of the cracker 100. In some embodiments, the sensor (e.g., the sensor 110 in FIG. 2) may include a plurality of sensors and may collect temperature information of the first portion and the second portion of the cracker 100. That is, the sensor 110 of FIG. 2 may include, inter alia, a first temperature sensor for measuring the internal temperature of the first portion of the cracker 100, and a second temperature sensor for measuring the internal temperature of the second portion of the cracker 100.

The first portion and the second portion of the cracker 100 may refer to parts of the cracker 100 that do not overlap with each other. In some embodiments, the first portion and the second portion may be portions of a region where the ammonia supplier (e.g., the ammonia supplier 140 of FIG. 2) and the cracker are connected.

The sensor 110 may measure the temperatures of individual portions at the inside of the cracker 100 including the first portion and the second portion of the cracker 100. The controller 120 may determine the second signal according to the temperatures of the individual portions at the inside of the cracker 100.

According to the second signal, the ammonia reactor control system 10 may change a pattern of a total supply amount of ammonia to the first portion and the second portion.

In an embodiment, the controller 120 may change a supply location of ammonia. When the temperature of the first portion is higher than the temperature of the second portion, the controller 120 may determine the supply amount of ammonia to the first portion and the supply amount of ammonia to the second portion among the total supply amount of ammonia differently through the second signal. For example, the controller 120 performs the control to induce the maximum ramping effect for efficiently decomposing or cracking ammonia while ensuring safety and product quality. For example, when the temperature of the first portion is relatively high, a smaller amount of ammonia may be controlled to be supplied to the first portion than that to the second portion.

In an operation S620, the controller 120 may determine the second signal based on the temperature information of the individual portions. The controller 120 may use the temperature information collected from each individual portion to adjust the supply amount of ammonia to the first portion and the second portion so that the maximum ramping effect may be achieved.

In some embodiments, the controller 120 may determine the first signal or the second signal based on the temperature information, the ammonia supply amount information and the hydrogen supply amount information. The controller 120 may adjust the supply amount of ammonia or hydrogen to generate the maximum ramping effect based on various information collected by the ammonia reactor control system 10.

In an embodiment, the controller 120 may set the total supply amount of ammonia or hydrogen to generate the maximum ramping effect based on the same information and may change the pattern of supplying ammonia or hydrogen to the cracker 100. For example, the controller 120 may maintain the appropriate internal temperature of the cracker 100 by increasing or decreasing the supply amount of ammonia and/or unreacted hydrogen depending on the temperature of the cracker 100. Additionally, the controller 120 may maintain the internal temperature of the cracker 100 in an appropriate range to reduce the residual ammonia amount.

In some embodiments, the disclosed embodiments may be implemented in the form of a recording medium storing instructions executable by a computer. The instructions may be stored in the form of a program code, and a program module may be generated by a processor to perform operations of the disclosed embodiments. The recording medium may be implemented in a computer-readable form.

The computer-readable recording medium includes all types of recording media in which instructions that may be read by a computer are stored. For example, the recording medium may include a read only memory (ROM), a random access memory (RAM), a magnetic tape, a magnetic disk, a flash memory, an optical data storage device (150), etc.

## Claims

1. A system (10) for controlling an ammonia reactor, the system (10) comprising:
a sensor (110) configured to measure an internal temperature of a cracker (100);
a controller (120) configured to receive temperature information collected from the sensor (110);
a hydrogen supplier (130) configured to determine a hydrogen supply amount into the cracker (100) according to a first signal from the controller (120); and
an ammonia supplier (140) configured to determine an ammonia supply amount into the cracker (100) according to a second signal from the controller (120),
wherein the controller (120) is configured to receive ammonia supply amount information from the ammonia supplier (140), and to determine the first signal based on the temperature information and the ammonia supply amount information.

2. The system (10) for controlling an ammonia reactor of claim 1, further comprising a storage device configured to store preset heat supply amount information to a fuel cell (300) through the cracker (100),
wherein the controller (120) is configured to check the preset heat supply amount information from the storage device (150), and to calculate internal heat absorption information of the cracker (100) based on the temperature information.

3. The system (10) for controlling an ammonia reactor of claim 2, wherein the controller (120) is configured to compare the preset heat supply amount information with the internal heat absorption information of the cracker (100), and to temporarily lower a power of the fuel cell (300).

4. The system (10) for controlling an ammonia reactor of any one of claims 1 to 3, further comprising:
a temperature sensor (60) configured to detect a temperature of ammonia supplied into the cracker (100) from the ammonia supplier (140); and
a pre-heater configured to pre-heat ammonia supplied into the cracker (100) according to a third signal from the controller (120).

5. The system (10) for controlling an ammonia reactor of claim 4, wherein the controller (120) is configured to receive ammonia temperature information in the ammonia supplier (140) from the temperature sensor (60), and to determine the third signal for operating the pre-heater based on the ammonia temperature information.

6. The system (10) for controlling an ammonia reactor of any one of claims 1 to 5, wherein the controller (120) is configured to receive hydrogen supply amount information from the hydrogen supplier (130), and to determine the second signal based on the temperature information and the hydrogen supply amount information.

7. The system (10) for controlling an ammonia reactor of claim 6, wherein the controller (120) is configured to determine the ammonia supply amount as a first capacity according to the second signal when a temperature of the cracker corresponds to a preset first temperature range, and to determine the ammonia supply amount as a second capacity according to the second signal when the temperature of the cracker corresponds to a preset second temperature range,
wherein a lower limit of the first temperature range is greater than an upper limit of the second temperature range, and the first capacity is less than the second capacity.

8. The system (10) for controlling an ammonia reactor of any one of claims 6 and 7, wherein the sensor is configured to measure temperatures of internal portions including a first portion and a second portion of the cracker (100),
the ammonia supplier (140) is connected to the first portion and the second portion, and
the controller (120) is configured to determine the second signal based on temperature information of the first portion and the second portion.

9. The system (10) for controlling an ammonia reactor of any one of claims 6 to 8, wherein the controller (120) is configured to determine the first signal or the second signal based on the temperature information, the ammonia supply amount information and the hydrogen supply amount information.

10. A method of generating hydrogen from an ammonia feed, the method comprising:
feeding ammonia to a cracker (100);
receiving temperature information collected from a sensor (110) that measures an internal temperature of the cracker (100);
receiving ammonia supply amount information from an ammonia supplier (140) that determines an ammonia supply amount into the cracker (100);
receiving hydrogen supply amount information from a hydrogen supplier (130) that determines a hydrogen supply amount into the cracker (100); and
providing a first signal or a second signal to the hydrogen supplier (130) or the ammonia supplier (140) based on the temperature information, the ammonia supply amount information and the hydrogen supply amount information.
